# EUROPEAN PATENT SPECIFICATION

(11) **EP 3 907 344 B1**
(45) Date of publication and mention of the grant of the patent: **11.01.2023**
(21) Application number: 20382366.1
(22) Date of filing: 04.05.2020
(51) Int. Cl.: E04F 10/02, F16G 1/28

(54) **RUNNER FOR MOVING A SLIDING CANOPY AND PULLING SYSTEM THEREOF IN A PERGOLA TYPE STRUCTURE**
LÄUFER ZUM BEWEGEN EINES VERSCHIEBBAREN SONNENDACHS UND DESSEN ZUGSYSTEM IN EINER PERGOLASTRUKTUR
ROUE POUR DÉPLACER UN AUVENT COULISSANT ET SON SYSTÈME DE TRACTION DANS UNE STRUCTURE DE TYPE PERGOLA

(43) Date of publication of application: 10.11.2021
(73) Proprietor: Gaviota Simbac, S.L., 03630 Sax Alicante (ES)
(72) Inventor: GUILLEN CHICO, Francisco, 03630 Sax (Alicante) (ES); TOLEDO CAMPOS, Francisco, 03630 Sax (Alicante) (ES); BALLESTER PEREZ, Ignacio, 03630 Sax (Alicante) (ES)
(74) Representative: Carlos Hernando, Borja

(56) References cited:
- EP-A1- 2 631 384
- EP-A1- 3 333 335

## Description

### OBJECT OF THE INVENTION

The present invention relates to a runner for moving a sliding canopy and pulling system thereof in a pergola type structure, of the type that is made up of at least two parallel beams and transverse sticks which by means of the movement thereof move the canopy. It relates to a runner, as an element that slides along the beam and is fastened to a stick, pulling said stick by the action of a sliding strap.

The runner moves along the beam and incorporates fastening means for fastening to the belt, the movement of which will move the runner, and means for attaching to the stick, which will be pulled by the movement of the runner along the beam. The invention mainly relates to a runner with particular fastening means for fastening the belt, specifically a runner comprising a body with sliding elements, for moving along a beam, and an upper projection, further exhibiting two clasps, each clasp able to be coupled to a side of the projection for fastening the belt between the clasp and the projection.

Likewise, the invention relates to a system for moving a canopy in a pergola structure exhibiting a runner with the aforementioned features and a pulling belt.

The field of application of the present invention falls within the sector of the industry dedicated to manufacturing canopies, focussing particularly in the sector of those having a pergola type structure and tensioned canvas type canopy, and more specifically to the accessories of the fastening mechanism of the canopy to the structure which enable the sliding thereof for the folding and unfolding thereof.

### BACKGROUND OF THE INVENTION

Sliding type canopies in pergola type structures are known, usually of the type known as tensioned canvas, usually manufactured in PVC, the fixing system of which comprises at least two ends of each one of the several sticks that are incorporated integrally fixed to the canopy in transverse direction to that of the movement thereof for the folding and unfolding thereof. The movement of the canopy is achieved by means of a runner that has wheels and that is inserted in a guide of the beam of the structure sliding from one end to the other of the same. In the lower portion, it exhibits means for attachment or fastening to a stick, usually a stud, which is generally screwed to an end support located at the end of the profile making up said stick. The runner slides because the two ends of a belt are attached to said runner, which is usually attached to the first stick of the canopy such that said runner acts as drive runner pulling the canopy from one end to the other of the structure, by means of a motor, or a manually actuated system, which causes the movement of said belt. In addition to said runner, there may be others.

Thus, the runners that hold the sticks go inside the guides. The belt is hooked to the first runner, transmitting the movement of the motor or manual machine. A canopy, usually made of PVC, is hooked to the first runner and the stick thereof, and is attached to the rest of the sticks, such that when the first runner moves, the stick moves with the canopy and pulls the rest of the sticks until it reaches the end of the path, which is when the canopy is tensioned preventing the formation of water pockets when it rains.

Furthermore, when the canopy is of greater dimensions, and consequently the sticks are longer, in addition to the two runners that are fixed to the respective end supports of each stick fastening the canopy to the lateral beams of the structure, one or more intermediate runners fixed to intermediate support pieces are usually included to join two consecutive sticks, and which fasten the sticks of the canopy to one or more beams of intermediate points of the structure.

From EP3333335A1 and EP2631384A1 a relevant runner for moving a sliding canopy in a pergola type structure with sticks, according to the preamble of claim 1 is known.

However, a current problem in canopy pulling systems and more specifically in the runners, of the state of the art is that, in order to fix the ends of the belt to the runner, the belt must be perforated to fix it by screwing or nailing it to the runner, which implies a possible weakening of the belt itself which can reduce the useful life thereof, as it is precisely the drilling point where more traction force is applied when it is actuated to pull the weight of the canopy. Therefore, it seems necessary to develop an improved fastening system where the need to perforate the belt to fix it by the ends thereof to the runner is removed.

An additional problem relates to the fastening of the runner to the stick, which is normally screwed during the assembly of the canopy to the structure. This is especially the case in canopies of such dimensions that one single person cannot handle and hold them in order to screw said runners to the sticks, so that the intervention of two or more operators to hold the canopy in an elevated position while said screwed fixings are being performed becomes essential, such that the assembly, in addition to a higher staff cost, becomes slower and more complicated.

The present invention intends to solve the aforementioned problems by means of a pulling runner for moving a canopy and a pulling system of said runner.

### DESCRIPTION OF THE INVENTION

The first object of the present invention is a runner for moving a sliding canopy, by means of a pulling belt, along the beams of a pergola type structure with sticks, according to claim 1.

Concretely, the runner object of the present invention comprises:
- a body with sliding elements and an upper projection, and
- two clasps, each clasp able to be coupled to a side of the projection, both sides facing each other, to fasten said belt, between said clasp and the side of the projection.

The body of the runner exhibits sliding means on both sides thereof, preferably cylindrical elements by way of wheels, and an upper projection that is a pin with a certain geometrical cross section, preferably a T-shaped cross section, which serves to couple on both sides the two clasps made up, in turn, of two pieces wherein at least one of them exhibits a recess specifically designed to fit said projection or pin, in addition to at least one recess to tightly fit a section of the ends of the belt that is locked between both of them. The recess receiving the belt could be made up of two recesses, which will each receive one end of the belt, or a single continuous recess which will receive a continuous section of the belt. Once coupled, they are fixed with a screw.

Instead of exhibiting wheels as sliding means, it could incorporate skates or sliding pieces. It must be taken into account that the runner slides over guides arranged in the profile making up the beam of the structure, which is usually made of aluminium or steel, so the material of the sliding means must be a material exhibiting low resistance in the contact thereof with said guide, whether it is a wheel or a skate.

Likewise, although a T-shape is preferable for the cross section of the projection, this can have other shapes, such as triangular, circular, among others. As mentioned, at least one of the clasps comprises in the inner face thereof at least one first recess complementary with the shape and dimension of one of the facing sides of the projection to receive the same, in other words, to introduce the projection into the recess of the clasp and additionally, the clasp exhibits at least one second recess, preferably over the previous one, which is complementary with the cross section of the belt, which will preferably be toothed, the shape of the tooth being able to vary. Preferably the two clasps are two symmetrical pieces, such that once assembled on each side of the body of the runner, keeping the belt and the body of the runner between them, each symmetrical piece receiving half of the body of the runner and half of the belt, both clasps are fastened together by means of retention means, preferably screws, although they could be other retention means such as clips. In the event that the clasps are not symmetrical, one of them could, for example, be placed on one side of the projection, until the same is totally covered in the first recess thereof, in other words, receiving the projection in the entirety thereof, and receive the entirety of the belt in the second recess such that the other clasp would serve exclusively as a cap of the previous clasp being fastened together by appropriate clasping means, preferably screws. Another alternative is that one of the clasps exhibits the recesses thereof with the dimensions and shape to receive completely both the projection and the belt, such that the second clasp would serve as a cap of the clasp with the recesses.

By means of the above runner, the assembly of the belt on the runner is facilitated, in addition to preventing the machining of the belt to be able to fasten it to the runner, which reduces the useful life of said belt. Particularly, once the runner is placed on the guide of the beam, one of the clasps is arranged on the projection, such that said projection is introduced into the first recess of the clasp or of one of the clasps depending on whether one or both exhibit a first recess. One end of the belt is subsequently introduced through an end of the second recess and the other end of the belt through the other end of the second recess, arranged over the first recess of the runner, such that the belt with pulleys on the ends thereof, describes a closed path such that when the belt is rotated, this causes the longitudinal movement of the runner along the guide. Preferably, the second recess is divided into two recesses that are symmetrical to receive in each one of them a section of the belt of the same length preventing failures in the assembly of the belt.

This solution makes it easy for the two ends of the belt to be fixed simply, quickly and without the need to drill the belts to the runner.

Additionally, the runner must exhibit means for fastening or coupling to the stick, as the canopy to be moved will be attached to said stick so that when the belt is actuated, by rotating one of the pulleys, whether by the action of a motor or by a manually actuated mechanism, the belt pulls the runner which in turn will move the stick along the beam along which the runner moves.

An alternative to said fastening means for fastening to a stick is the arrangement of at least one stud, they could also be two or more, in the lower portion of the body of the runner, extending below the mentioned sliding elements. At least one of said studs could exhibit a perimeter rib in a place in the length thereof which will facilitate the coupling thereof to a clip arranged in the stick, in the cover thereof or in the attachment piece. Preferably, the runners will adjust by means of support parts as caps arranged on the ends of the sticks, or in those cases where the sticks must be excessively long, the runners will adjust to intermediate support pieces acting as attachment pieces between two sticks or stick segments making up the same.

Other fastening means by means of the stud are possible, such as, for example, placing a thread on the free end thereof, or a through-hole to introduce an element therein which prevents the removal of the stick from the stud. Likewise, other fastening systems could be arranged in the lower portion of the runner, such as for example a lower projection that complements a hollow with a complementary shape arranged in the stick, such that by introducing the lower projection of the runner into the hollow of the stick both of them would be fastened. For example, they could have a dovetail shape, although other complementary shapes are possible. Alternatively, a lower surface of the runner body that adheres to the stick or is screwed thereto could further be used.

A second object of the invention is a pulling system in a sliding canopy in a pergola type structure with a runner able to move along a beam that exhibits:
- A runner according to the aforementioned, particularly a runner with at least one body with sliding elements and an upper projection, and two clasps, each clasp able to be coupled to a side of the projection, both sides facing each other, to fasten said belt, between said clasp and the side of the projection, at least one of the clasps exhibiting at least one first recess to receive the projection and at least one second recess; and
- A pulling belt arranged between both clasps and introduced into the at least one second recess of at least one of the clasps, the projection sides being further introduced into the first recesses of the clasps.

One section of each one of the ends of the belt is introduced into this second recess, which, as it has been mentioned above, could in turn be separated into two recesses. The strap, as it has been mentioned above, is preferably moved by the action of a motor, preferably electric, which actuates one of the pulleys, or by manual means actuated by one of the pulleys.

Preferably, the clasps exhibit perforations for inserting fixing screws once the two clasps are coupled together with the runner placed between both of them. Other fixing means different from screws can be used.

### DESCRIPTION OF THE DRAWINGS

To complement the description of the invention and in order to facilitate the understanding of the features of the invention, the following figures are included by way of illustration and not limitation.
Figure 1 shows a schematic view of a pergola type structure with the sticks of the canopy for which the invention is intended.
Figure 2 shows a perspective view of a beam of the structure and one of the ends of the sticks of the canopy which are coupled thereto by means of a runner with a stud in the lower portion thereof.
Figure 3 shows a perspective view of the runner object of the invention, a body with sliding elements and an upper projection, and a stud as an element of the fastening means for fastening to the stick.
Figure 4 shows an exploded perspective view of the runner, the clasps, and the belt.
Figure 5 shows a perspective view of the elements of Figure 5 assembled.
Figure 6 shows an elevation view of a cross section of a beam with a runner such as that the one in Figure 4 in the interior thereof, without the clasps or the belt.
Figure 7 shows an elevation view of a cross section of a beam with a runner such as the one in Figure 5 in the interior thereof, showing the clasps assembled on the upper projection of the runner.
Figure 8 shows a perspective view of a runner such as the one in Figure 4 in a first step prior to the assembly thereof.
Figure 9 shows a perspective view of a runner with one of the clasps assembled on the upper projection of the runner.
Figure 10 shows a perspective view of a runner with one of the clasps assembled on the upper projection of the runner and with the belt introduced into said clasp.
Figure 11 shows a perspective view of a runner with both clasps assembled on the upper projection of the runner and the belt between both of them.
Figure 12A shows a runner with the two clasps assembled and the belt, prior to the introduction thereof into a guide.
Figure 12B shows a cross-sectioned beam and a runner with the two clasps assembled and the belt.
Figure 13 shows an alternative runner to that of Figure 4 in which the fastening means for fastening to the stick is a stud without a rib for the coupling thereof to the stick but with a thread on the free end thereof.
Figure 14 shows an alternative runner to that in previous figures in which the fastening means for fastening to the stick is a lower surface which can use adhesive or screws (through holes in the base thereof) to be fastened to the stick. Likewise, the lower shape of the runner can be complementary to another shape located in the stick, thus enabling the assembly of one inside the other.

### PREFERRED EMBODIMENT OF THE INVENTION

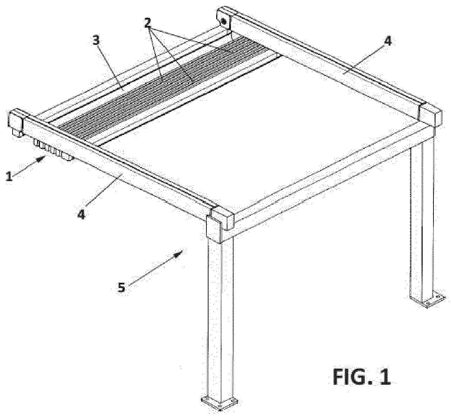

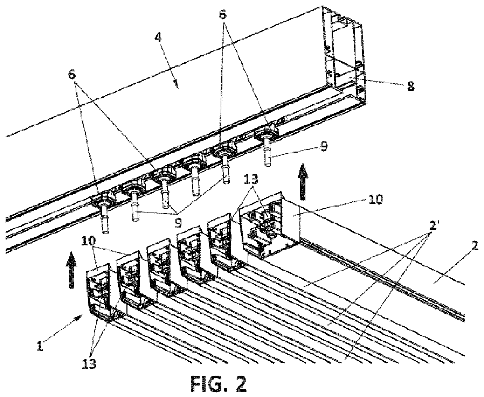

In light of the aforementioned figures, a description of the invention will be made below referencing the same. The invention, a runner for moving a sliding canopy and pulling system thereof in a pergola type structure, is of special application in a structure such as that in Figure 1. Thus, as it can be seen in the figure, the structure (5) exhibits a pulling system (1) for the movement of the sticks (2) of a sliding canopy (3) along the beams (4) of a pergola type structure (5). The structure (5) comprises, for at least each end of each one of the sticks (2) of the canopy (3) and, possibly, for one or more intermediate attachment points of the segments that the sticks (2) may be divided into, a runner (6) equipped with sliding elements, such as wheels (7), which is inserted in a guide (8) of the beam (4) to slide along the same, having fastening means for fastening to the stick (2). In Figures 2 to 13, said fastening means for fastening to the stick (2) are a stud (9) emerging from the lower portion of the runner (6) and which is fastened to an end of the stick (2) through an end support piece (10) or an intermediate support piece (not shown) which joins or attaches two stick (2) segments. At least one of the runners (6) of a first stick (2) of the canopy (3) is attached to the respective ends of a belt (12) which, by means of a pulley actuated by a motor, preferably electric, or manually, transmits movement to the runner.

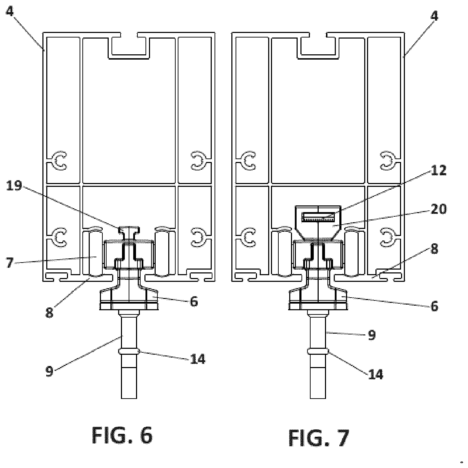

The runners (6) can be used both for the initial stick (2) or first stick (2) of the canopy, which usually is greater in size than the rest of sticks (2'), and for the rest of the sticks (2') which are smaller in size, as observed in Figure 7.

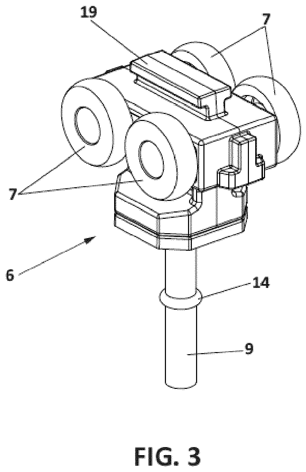

The runner (6) object of the invention is shown in Figures 3 to 14. Figure 3 shows the upper projection (19), exhibiting a T-shaped cross section for the fastening of the clasps (20) which help to fasten the belt (12), as well as the sliding means (7). The runner (6) exhibits a stud (9) with a rib (14) as fastening means for fastening to the stick (2).

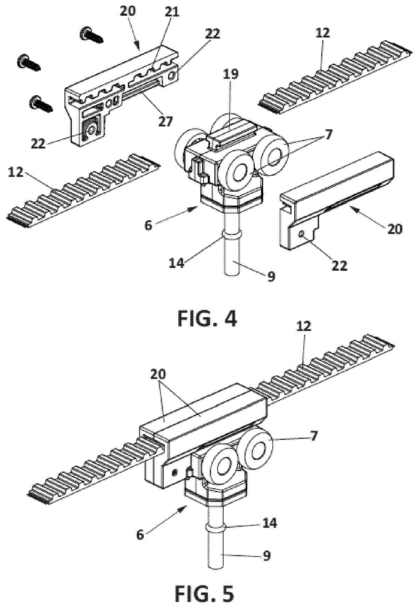

Figure 5 shows the runner (6) as well as the clasp elements (20) and a belt (12) prior to being assembled, wherein on the upper projection (19) are coupled the two fixing clasps (20) to which the sections of the ends of the belt (12) are locked by press-fitting without perforation, by means of a first recess (27). As in the previous figure, it can be seen how the upper projection (19) of the runner (6) to which the clasps (20) of the belt (12) are coupled, is a pin emerging vertically from the upper portion of the runner (6) with a configuration exhibiting a T-shaped cross section. Said pin or projection (19) with a T-shaped cross section can exhibit any other geometrical cross section which enables the coupling thereof with the clasp (20), such as, for example, a triangular or square or circular or rhomboid cross section, among others.

The clasps (20) are made up of two parts, preferably symmetrical, exhibiting, in the inner face whereby they face each other, a first recess (27) and over this, at least one second continuous recess, preferably separated into two independent recesses (21). The first recess (27) is a hollow designed to be coupled to the upper projection (19), with the shape and dimension of half the projection (19) and therefore, able to complement the shape of said projection (19) to adapt to the shape of the T-shaped pin. The one or several second recesses (21) are specifically designed such that they exhibit hollows with the shape and dimension of the belt (12) to tightly fit a section of the respective ends thereof such that it is locked between both clasps (20). The recess (21) will be preferably continuous when it is designed to receive a section of the belt (12), and will be separated into two recesses (21) when it is designed to receive an end of the belt (12) in each one of them.

According to the foregoing, as the figures show, at least one of the clasps (20) comprises in the inner face thereof at least one first recess (27) complementary with the shape and dimension of one of the facing sides of the projection (19) to receive the same and at least one second recess (21) complementary with the cross section of the belt (12), such that each recess receives half the projection (19) and half the belt (12). Alternatively, only one of the clasps (20) receives in the first recess (27) thereof the entirety of the projection (19), the other clasp (20) serving as a cap to the previous one. Likewise, in this last alternative, one of the clasps (20) could receive the entirety of the projection (19) and the other clasp (20) could receive the entirety of the belt (12), or one of the clasps (20) receives the projection (19) and the belt (12), and the other clasp serves exclusively as a cap.

Moreover, in both clasps (20), or at least in one, perforations (22) are envisaged for inserting fixing screws once both clasps (20) are coupled together and to the runner (6). Figure 6 shows the runner (6) with the assembled components thereof and the belt (12) which makes up the system object of the invention.

Figures 6 and 7 show a runner (6) introduced into a beam (4) and arranged on the guide (8) thereof. Figure 6 shows the runner (6) without the clasps (20) and Figure 7 shows the complete system inside the beam (4).

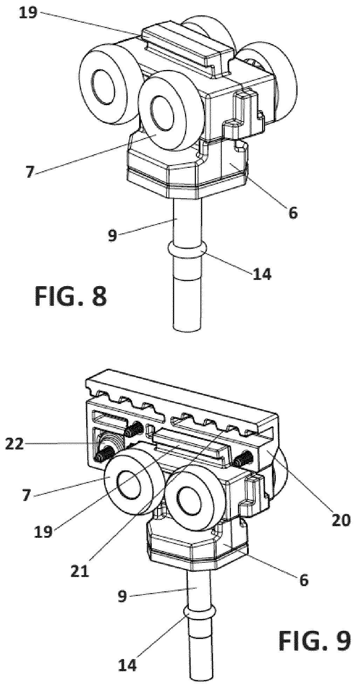

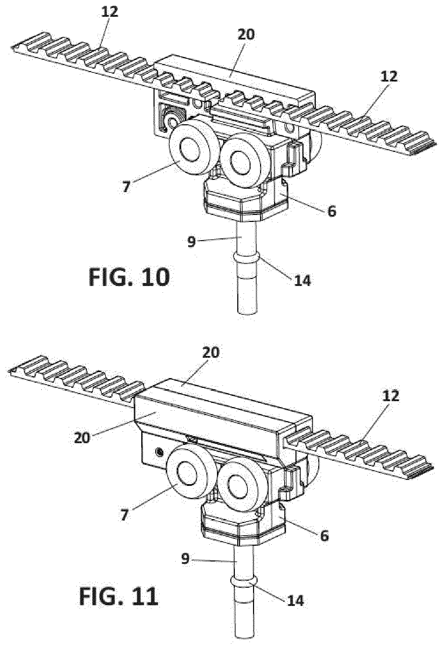

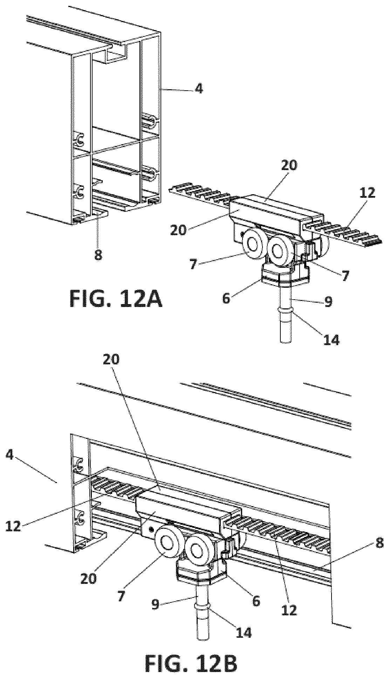

Figures 8 to 12 show the steps for the assembly of the pulling belt (12) of a pergola type structure (5) over a runner (6) according to the invention. In a first step, starting from the runner (6) one of the clasps (20) is arranged on the upper projection (19), such that said projection (19) is introduced into the first recess (27) of the clasp (20) (Figure 9). Subsequently, in the second recesses (21), arranged over the first recess (27), one end of the belt (12) is introduced into a second recess (21) and the other end of the belt (12) is introduced into the other recess (21) (Figure 10). Next, the other clasp (20) is coupled to the previous set such that the portion of the upper projection (19) of the runner (6) is introduced into the first recess thereof and the sections of the belt (12) are introduced into the second recesses (21) and are fastened with screws (Figures 11 and 12.) Figures 12A and 12B show, respectively, the runner (6) with the belt (12) prior to the introduction thereof into a beam (4) and inside said beam (4) on the guides (9). In this way, the belt (12) with pulleys at the ends thereof (not shown), describes a closed trajectory such that when the belt (12) is rotated, this causes the longitudinal movement of the runner (6) along the guide (8) of the beam (4).

In the examples of Figures 2 to 12, the stud (9) exhibits a rib (14) which after being introduced into any of the support pieces of the stick, end (10) or intermediate ones, is introduced by pressure into a clip (13), inserted as an independent element of said support piece (10), until the rib (14) passes through the clip (13) and thus the position of the stud (9) in the clip (13) is ensured and therefore the position of the runner (6) in the stick (2). In an embodiment, the clip (13) is a cylindrical piece, in which as it has been mentioned, the stud (9) of the runner (6) penetrates until it is locked in the rib (14), which in turn, is determined by a perimeter widening of the diameter of the stud (9). Furthermore, preferably, said rib (14) is symmetrical, such that it has the same shape above and below so that the clipping force is the same both for the penetration of the rib (14) into the clip (13) as for the removal thereof. In any case, said rib may or may not be symmetrical.

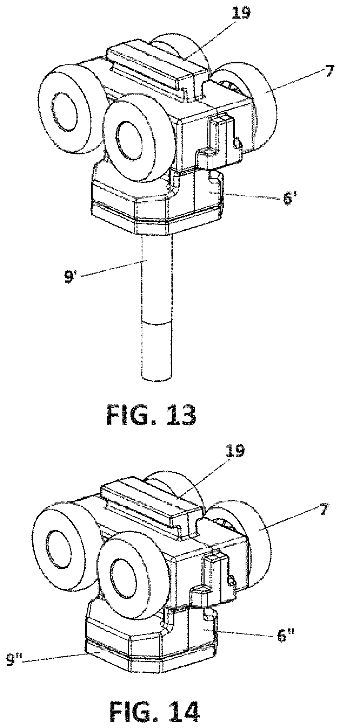

Figure 13 shows a runner (6') that, as an alternative to a stud (9') as a fastening means for fastening a stick (2), exhibits, instead of a rib for the fastening thereof to a stick (2), a thread in the lower end thereof which will interact with a nut or similar after the stud goes through said stick (2).

Figure 14 shows another runner with another alternative as a fastening means for fastening to the stick (2). In this example, the fastening means for fastening to a stick (2) can be either the lower surface (9") of the runner (6") which can use adhesive or screws (through holes in the base thereof) for fastening to the stick or the lower shape of the runner (6") which can be complementary with a guide located in the stick (2) or in the cap (10) or attachment piece (11), thus enabling the assembly of the runner (6") inside the guide of the stick (2).

Taking into account Figure 1, a simplified example of the type of structure (5) for which the mechanism (1) of the invention is intended can be seen schematically, wherein the sticks (2) of the canopy (3) have been represented fixed at both ends to beams (4).

Moreover, Figure 2 shows, in an exploded view, the essential elements comprised by the fastening mechanism (1) of the invention to fix one of the ends of a stick (2) to the beam (4), in other words, the runner (6), the cap (10) and the clip (13), the thread (15) and the washer (16) being appreciated, which will definitively fix the stud (9) of the runner (6) and the fastening screws (23) of the cap (10) to the stick (2) profile and the cover cap (18) covering and embellishing the cap (10) which fixes the clip (13).

And, taking into account Figures 3-A and 3-B, also in an exploded view, the elements comprised by the mechanism (1) of the invention to fix the stick (2) to a beam (4) in an intermediate point of the same by means of an attachment piece (11) can be observed, and which also comprise, essentially, the runner (6), the attachment piece (11), made up of a profile segment which is inserted at both ends to the respective sections into which the stick (2) is divided, and the clip (13). Moreover, in this case the inclusion of an intermediate frame (24) is intended which engages with the attachment piece (11) to fix the position of the clip (13) and the runner (6). Figure 3-B shows said intermediate frame (24) once inserted into the attachment piece (11) and in the inner hole of which a sleeve (25) is arranged to guide the placement of the thread (15) with a washer (16) which will definitively fix the stud (9) to the runner (6). Likewise, to fix the position of the clip (13) in the attachment piece (11), a small holed platen (26) is included inside, with a hollow where the clip (13) fits and which is fastened to said attachment piece (11) by means of screws (23).

## Claims

1. A runner (6) for moving a sliding canopy (3) in a pergola type structure with sticks (2), by means of a pulling belt (12), along beams (4) which make up the pergola type structure, said runner (6) comprises:
- a body with sliding elements (7) and an upper projection (19), and
- at least one clasp (20) to fasten said pulling belt (12), **characterised in**
- two such clasps (20), each clasp (20) exhibiting a side and is able to be coupled to a side of the upper projection (19) both sides facing each other, to fasten said belt (12), between said clasp (20) and the side of the upper projection (19).

2. The runner, according to claim 1, **characterised in that** at least one of the clasps (20) comprises in the inner face thereof at least one first recess (27) complementary with the shape and dimension of one of the facing sides of the projection (19) to receive the same and at least one second recess (21) complementary with the cross section of the belt (12).

3. The runner, according to claim 2, **characterised in that** the first recess (27) of the clasps (20) receives half of the projection (19).

4. The runner, according to claim 2, **characterised in that** at least one of the clasps (20) receives in the first recess (27) thereof the entirety of the projection (19), the other clasp (20) serving as a cap.

5. The runner, according to any of the preceding claims, **characterised in that** the body comprises fastening means for fastening to a stick.

6. The runner, according to claim 5, **characterised in that** it comprises as fastening means for fastening to a stick at least one stud (9) in the lower portion of the body and which extends below the sliding elements (7) for fastening a stick (2).

7. The runner, according to claim 6, **characterised in that** it comprises two studs.

8. The runner, according to any of the preceding claims 5 or 6, **characterised in that** at least one of the studs (9) exhibits a rib (14) for the coupling thereof to the stick (2).

9. The runner, according to any of the preceding claims, **characterised in that** the projection (19) is a pin emerging vertically from the upper portion of the runner with a cross section configuration in a geometrical shape, preferably T-shaped.

10. A pulling system of a sliding canopy (3) in a pergola type structure (5) with a runner (6) able to move along a beam (4), **characterised in that** it comprises:
- A runner (6) according to claims 1 and 2, and
- A pulling belt (12) arranged between both clasps (20) and introduced into at least one second recess (21) of at least one clasp (20), the sides of the upper projection (19) being further introduced into at least one first recess (27) of at least one clasp (20).

11. The system, according to claim 10, **characterised in that** between both clasps (20) is arranged at least one section or end of the belt (12).

12. The system, according to any of claims 10 or 11, **characterised in that** it comprises a runner according to any of claims 3 to 9.

13. The system, according to any of claims 10 to 12, **characterised in that** it comprises a motor that moves the strap (12).

14. The system, according to any of claims 10 to 13, **characterised in that** both clasps (20) exhibit perforations (22) for the insertion of fastening screws once both clasps (20) are coupled together with the runner (6) placed between both of them.

## Patentansprüche

1. Läufer (6) zum Bewegen einer verschiebbaren Überdachung (3) in einer Pergola-Struktur mit Stäben (2) mittels eines Zuggurts (12) entlang von Trägern (4), die die Pergola-Struktur bilden, wobei der Läufer (6) umfasst:
- einen Körper mit Schiebeelementen (7) und einem oberen Vorsprung (19), und
- mindestens eine Schließe (20) zum Befestigen des Zuggurtes (12), **gekennzeichnet durch**
- zwei derartige Schließen (20), wobei jede Schließe (20) eine Seite aufweist und in der Lage ist, an eine Seite des oberen Vorsprungs (19) gekoppelt zu werden wobei beide Seiten einander zugewandt sind, um den Gurt (12) zwischen der Schließe (20) und der Seite des oberen Vorsprungs (19) zu befestigen.

2. Läufer nach Anspruch 1, **dadurch gekennzeichnet, dass** mindestens eine der Schließen (20) an ihrer Innenfläche mindestens eine erste Vertiefung (27) umfasst, die zu der Form und Abmessung einer der einander zugewandten Seiten des Vorsprungs (19) zu dessen Aufnehmen komplementär ist, und mindestens eine zweite Vertiefung (21), die zu dem Querschnitt des Gurtes (12) komplementär ist.

3. Läufer nach Anspruch 2, **dadurch gekennzeichnet, dass** die erste Vertiefung (27) der Schließe (20) die Hälfte des Vorsprungs (19) aufnimmt.

4. Läufer nach Anspruch 2, **dadurch gekennzeichnet, dass** mindestens eine der Schließen (20) in ihrer ersten Vertiefung (27) die Gesamtheit des Vorsprungs (19) aufnimmt, wobei die andere Schließe (20) als eine Kappe dient.

5. Läufer nach einem der vorstehenden Ansprüche, **dadurch gekennzeichnet, dass** der Körper Befestigungsmittel zum Befestigen an einem Stab umfasst.

6. Läufer nach Anspruch 5, **dadurch gekennzeichnet, dass** er als Befestigungsmittel zum Befestigten an einem Stab mindestens einen Zapfen (9) in dem unteren Teil des Körpers, der sich unterhalb der Schiebeelemente (7) erstreckt, zum Befestigen eines Stabes (2) umfasst.

7. Läufer nach Anspruch 6, **dadurch gekennzeichnet, dass** er zwei Zapfen umfasst.

8. Läufer nach einem der vorstehenden Ansprüche 5 oder 6, **dadurch gekennzeichnet, dass** mindestens einer der Zapfen (9) eine Rippe (14) für sein Koppeln an den Stab (2) aufweist.

9. Läufer nach einem der vorstehenden Ansprüche, **dadurch gekennzeichnet, dass** der Vorsprung (19) ein Stift ist, der senkrecht aus dem oberen Teil des Läufers mit einer Querschnittkonfiguration in einer geometrischen Form, die bevorzugt T-förmig ist, austritt.

10. Zugsystem einer verschiebbaren Überdachung (3) in einer Pergola-Struktur (5) mit einem Läufer (6), der in der Lage ist, sich entlang eines Trägers (4) zu bewegen, **dadurch gekennzeichnet, dass** es umfasst:
- einen Läufer (6) nach einem der Ansprüche 1 und 2, und
- einen Zuggurt (12) der zwischen den beiden Schließen (20) angeordnet ist und in mindestens eine zweite Vertiefung (21) mindestens einer Schließe (20) eingeführt ist, wobei die Seiten des oberen Vorsprungs (19) ferner in mindestens eine erste Vertiefung (27) mindestens einer Schließe (20) eingeführt sind.

11. System nach Anspruch 10, **dadurch gekennzeichnet, dass** zwischen den beiden Schließen (20) mindestens ein Teilabschnitt oder Ende des Gurtes (12) angeordnet ist.

12. System nach einem der Ansprüche 10 oder 11, **dadurch gekennzeichnet, dass** es einen Läufer nach einem der Ansprüche 3 bis 9 umfasst.

13. System nach einem der Ansprüche 10 bis 12, **dadurch gekennzeichnet, dass** es einen Motor umfasst, der den Gurt (12) bewegt.

14. System nach einem der Ansprüche 10 bis 13, **dadurch gekennzeichnet, dass** beide Schließen (20) Perforationen (22) zum Einsetzen von Befestigungsschrauben aufweisen, sobald beide Schließen (20) mit dem Läufer (6), der zwischen ihnen platziert ist, zusammengekoppelt sind.

## Revendications

1. Glissière (6) pour le déplacement d'un auvent coulissant (3) dans une structure de type pergola avec des bâtons (2), au moyen d'une courroie de traction (12), le long de poutres (4) qui constituent la structure de type pergola, ladite glissière (6) comprend :
- un corps avec des éléments coulissants (7) et une saillie supérieure (19), et
- au moins un fermoir (20) pour fixer ladite courroie de traction (12), **caractérisée** en
- deux tels fermoirs (20), chaque fermoir (20) présentant un côté et est capable d'être couplé à un côté de la saillie supérieure (19)
les deux côtés se faisant face l'un à l'autre, pour fixer ladite courroie (12), entre ledit fermoir (20) et le côté de la saillie supérieure (19).

2. Glissière, selon la revendication 1, **caractérisée en ce qu'**au moins l'un des fermoirs (20) comprend dans la face interne de celui-ci au moins un premier évidement (27) complémentaire avec la forme et la dimension de l'un des côtés se faisant face de la saillie (19) pour recevoir celle-ci et au moins un second évidement (21) complémentaire avec la section transversale de la courroie (12).

3. Glissière, selon la revendication 2, **caractérisée en ce que** le premier évidement (27) des fermoirs (20) reçoit une moitié de la saillie (19).

4. Glissière, selon la revendication 2, **caractérisée en ce qu'**au moins l'un des fermoirs (20) reçoit dans le premier évidement (27) de celui-ci l'intégralité de la saillie (19), l'autre fermoir (20) servant de capuchon.

5. Glissière, selon l'une quelconque des revendications précédentes, **caractérisée en ce que** le corps comprend des moyens de fixation pour la fixation à un bâton.

6. Glissière, selon la revendication 5, **caractérisée en ce qu'**il comprend comme moyens de fixation pour la fixation à un bâton au moins un goujon (9) dans la partie inférieure du corps et qui s'étend sous les éléments coulissants (7) pour la fixation d'un bâton (2).

7. Glissière, selon la revendication 6, **caractérisée en ce qu'**elle comprend deux goujons.

8. Glissière, selon l'une quelconque des revendications précédentes 5 ou 6, **caractérisée en ce qu'**au moins l'un des goujons (9) présente une nervure (14) pour l'accouplement de celui-ci au bâton (2).

9. Glissière, selon l'une quelconque des revendications précédentes, **caractérisée en ce que** la saillie (19) est une broche émergeant verticalement depuis la partie supérieure de la glissière avec une configuration de section transversale dans une forme géométrique, de préférence en forme de T.

10. Système de traction d'un auvent coulissant (3) dans une structure de type pergola (5) avec une glissière (6) capable de se déplacer le long d'une poutre (4), **caractérisé en ce qu'**il comprend :
- Une glissière (6) selon les revendications 1 et 2, et
- Une courroie de traction (12) agencée entre les deux fermoirs (20) et introduite dans au moins un second évidement (21) d'au moins un fermoir (20), les côtés de la saillie supérieure (19) étant en outre introduits dans au moins un premier évidement (27) d'au moins un fermoir (20).

11. Système, selon la revendication 10, **caractérisé en ce qu'**entre les deux fermoirs (20) est agencée au moins une section ou une extrémité de la courroie (12).

12. Système, selon l'une quelconque des revendications 10 ou 11, **caractérisé en ce qu'**il comprend une glissière selon l'une quelconque des revendications 3 à 9.

13. Système, selon l'une quelconque des revendications 10 à 12, **caractérisé en ce qu'**il comprend un moteur qui déplace la bande (12).

14. Système, selon l'une quelconque des revendications 10 à 13, **caractérisé en ce que** les deux fermoirs (20) présentent des perforations (22) pour l'insertion de vis de fixation une fois que les deux fermoirs (20) sont couplés ensemble avec la glissière (6) placée entre les deux.
